# EUROPEAN PATENT APPLICATION

(11) **EP 4 712 280 A1**
(43) Date of publication of application: **18.03.2026**
(21) Application number: 25202068.0
(22) Date of filing: 15.09.2025
(51) Int. Cl.: H02G 1/06, E21B 17/01, H02G 1/14, H02G 3/04, H02G 15/08

(54) **DEVICE FOR PROTECTING A JOINT FOR CONNECTING CABLES FOR A CABLE STRINGING PLANT**

(30) Priority: 16.09.2024 IT 202400020575
(71) Applicant: TESMEC S.P.A., 20123 Milano (MI) (IT)
(72) Inventor: Oscar, Alberto, 24063 Castro (BG) (IT); Colleoni, Matteo, 24036 Ponte San Pietro (BG) (IT); Osio, Stefano, 24048 Treviolo (BG) (IT)
(74) Representative: Petraz, Gilberto Luigi

(57) **Abstract**

Device (10) for protecting a joint (18) for connecting cables (11) for a cable stringing plant (20), comprising a tubular body (19) in which, during use, the joint (18) is inserted; the tubular body (19) comprises one or more flexible portions (21) configured to allow, during use, a controlled curving of the device (10).

## Description

### FIELD OF THE INVENTION

The present invention concerns a device for protecting a joint for connecting cables, such as for example electrical conductors, ropes or suchlike, for a cable stringing plant.

In particular, the present invention concerns a device for protecting a joint usable in a plant for stringing, for example, a high-voltage overhead power line, and overhead lines in general which provide the so-called "braked stringing" of such cables, namely, overhead conductors.

### BACKGROUND OF THE INVENTION

In plants for stretching overhead lines, the current method for stringing overhead conductors, both in the case of building new lines and also in the case of replacing old conductors, provides the following operations:
- positioning of the sheaves for stringing the conductor on the towers that make up the section;
- connection of the new conductor to a pulling rope or to the existing conductor;
- recovery of the pulling rope or of the old conductor through a winch or a winch-brake, storing the pulling rope or the old conductor on empty reels previously prepared at the winch station;
- simultaneous release of the new conductor from the reel on which it is wound by using a brake (or a winch-brake) at the brake station, to allow the "braked" stretching of the new conductor.

Overhead high-voltage transmission lines can be composed of single conductors (one per phase), but more typically they are composed of multiple conductors for each phase, varying from 2 to 6, but also tending to increase up to 8 or 10 conductors.

The brake and winch stations are located at the opposite ends of a section of the line on which the conductor is being stringed or replaced.

The winch station where the pulling rope or the old conductor is recovered consists of a winch or a winch-brake machine for the recovery of the pulling rope or of the old conductor, and a number of reel holding retractors equal to the number of conductors that make up each single phase of the line. The empty reels that will collect the rope, which will be re-used, or the "old" conductor will then be installed on these retractors, the "old" conductor then being disposed of in suitable recycling centers.

The brake station where the unwinding and tensioning of the new conductor (or of a pulling rope to be used later for the stretching of new conductors) takes place will consist of a brake machine and a number of reel support stands equal to the number of conductors that make up each single phase of the line.

The size of the winch and brake stations is proportional to the number of support stands or retractors on which the individual reels have to be housed.

The brake winches for the recovery of the existing conductor consist of two capstans, whose diameter is 35 times the diameter of the conductor to be recovered.

Normally, the line undergoing conductor replacement has variable lengths, but it is typically divided into individual operating sections, whose length can indicatively vary from 3 to 6 km, depending on the morphological characteristics of the line and the orographic conditions of the terrain.

Consequently, the conductors that make up the high-voltage lines have multiple interruptions along their length, essentially due to the presence of what are known as "mid span joints". Their function is to connect the two ends of the conductors during a reel change, that is, when a reel of new conductor runs out and at the beginning of the next reel.

Generally, the joints consist of straight tubular cores made of aluminum and/or steel, with a length ranging from 500 mm to 2000 mm.

These joints cannot pass over the capstans of the brake machine, since they would break due to the bending caused by the winding onto the circular surface, with the consequent catastrophic fall of the line under tension.

Therefore, the joint can only be created in front of the brake machine, according to the following procedure:
- as the end of the reel approaches, stop the brake machine and clamp the conductor in front of the machine with clamps suitable to keep the pull on the line;
- release the pull with the brake machine in order to make the clamp take the load and unload the tension in the part of the conductor that is still on the capstans;
- connect the head of the new reel to the terminal end of the old reel by means of a temporary flexible joint (e.g. a sock-type joint);

- recover the conductor with the brake machine until the pull on the clamp is unloaded;
- remove the clamp from the conductor;
- resume the pulling of the line with the winch machine until the temporary joint has gone past the capstans and is in front of the brake machine;
- stop the brake machine and clamp the conductor in front of the machine with clamps suitable to keep the pull on the line;
- release the pull with the brake machine in order to make the clamp take the load and unload the tension in the part of the conductor that is still on the capstans;
- remove the temporary joint and create the permanent joint by compressing the tubular joints onto the ends of the conductors;
- recover the conductor with the brake until the clamp is unloaded;
- remove the clamp in front of the brake;
- resume stringing operations.

The sizes and rigidity of mid span joints are such that they cannot even pass through the stringing sheaves, without them permanently deforming or breaking, therefore so-called "jointing sleeves" or "joint covers" have to be used, which consist of tubular steel elements divided into two halves, which completely wrap the joint itself and protect it during stringing operations; these devices have to in any case be installed before or during the stretching and have to be removed once the stretching has ended.

The jointing sleeves wrap around the joint entirely, while allowing freedom of movement for the rest of the conductor, which exits at the ends of the joint.

Jointing sleeves currently known in the art prevent the aluminum pressed joint from bending, but cannot prevent the bend that is generated in the conductor at exit from the jointing sleeve when the cable, from the straight segment covered by the jointing sleeve, resumes the configuration of the stringing line.

In particular, for large diameter conductors or for conductors whose structure requires particularly wide radii of curvature, it is necessary to guarantee that the transition from the straight segment to the free segment is as gradual as possible.

There is therefore the need to perfect a device for protecting a joint for connecting cables that can overcome at least one of the disadvantages of the state of the art.

In particular, one purpose of the present invention is to provide device for protecting a joint for connecting cables that allows to protect and cover the joint effectively, and simultaneously allows to make the cable's change in direction from the inside to the outside of the protection device or jointing sleeve more gradual.

Another purpose of the present invention is to provide a device for protecting a joint for connecting cables that limits the curving of the cable at exit from the ends of the jointing sleeve, allowing for a gradual transition of the cable from the substantially straight position it assumes in a central segment of the jointing sleeve to the free position of the line configuration.

Another purpose of the present invention is to provide a device for protecting a joint for connecting cables that allows to effectively go past the sheaves present on the supports of a cable stringing plant by limiting the curving of the cable at exit from the ends of the protection device or jointing sleeve.

Another purpose of the present invention is to provide a cable stringing plant comprising one or more effective devices for protecting one or more joints for connecting cables.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, the present invention concerns a device for protecting a joint for connecting cables for a cable stringing plant.

According to one aspect of the invention, the protection device comprises a tubular body in which, during use, the joint is inserted. The tubular body comprises at the ends one or more flexible portions configured to allow the device to bend, during use. These one or more flexible portions are articulated and comprise a plurality of rings, each formed by at least two reciprocally joined half-rings.

By means of the present protection device, which is curvable thanks to the one or more flexible portions, it is possible to protect and cover the joint effectively while simultaneously allowing to make the cable's change in direction from the inside to the outside of the protection device or jointing sleeve more gradual.

The present protection device also limits the curving of the cable at exit from its ends, allowing for a gradual transition of the cable from the essentially straight position that it assumes in a central segment of the protection device or jointing sleeve to the free position of the line configuration.

By using the present device for protecting a joint for connecting cables it is also possible to effectively go past the sheaves present on the supports of a cable stringing plant by reducing or limiting the curving of the cable at exit from the ends of the protection device or jointing sleeve.

According to another aspect of the invention, once the half-rings are reciprocally joined, a contact line is created between the half-rings and on opposite sides of the device, which is directed substantially horizontally, vertically, or variously inclined.

According to another aspect of the invention, the one or more flexible portions comprise annular connections for connection between the rings.

According to another aspect of the invention, the one or more flexible portions comprise, for a given ring, a protruding annular connection configured to engage with a recessed annular connection of the following ring.

According to another aspect of the invention, the half-rings are reciprocally joined by means of removable attachment elements embedded in corresponding seatings.

According to another aspect of the invention, the tubular body is formed by at least two half-shells which are reciprocally joined.

According to another aspect of the invention, each of the half-shells has a semi-cylindrical shape so that, once reciprocally joined, they form a substantially cylindrical structure, namely, the tubular body.

According to another aspect of the invention, the one or more flexible portions allow to curve the device at the ends by an angle of approximately 10-15° with respect to the direction taken by the cable in the central segment of the protection device or jointing sleeve.

According to another aspect of the invention, at its ends the device comprises sockets for housing the cable.

According to another aspect of the invention, the sockets are tubular and comprise a segment located inside each of the one or more flexible portions and provided with a seating for housing the cable.

The invention also concerns an assembly comprising a joint for connecting cables for a cable stringing plant and a protection device in which the joint is inserted.

The invention also concerns a cable stringing plant, provided with at least one winch machine and at least one brake machine, which are positioned on opposite sides with respect to one or more intermediate supports. The plant comprises at least one joint for connecting cables which is provided with a protection device as defined above.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a schematic view of a cable stringing plant according to the present invention;
- fig. 1a is an enlarged view of a zone Z1 of the plant of fig. 1, which schematically shows a device for protecting a joint for connecting cables according to the present invention;
- fig. 2 is a three-dimensional view of the protection device;
- fig. 3 is a lateral view of the protection device;
- fig. 4 is a section view of the device considered according to the line IV-IV of fig. 3;
- fig. 5 is a partial view of the device in a bent configuration;
- fig. 6 is a three-dimensional view of a first part of a flexible portion of the device;
- fig. 7 is a three-dimensional view of a second part of the flexible portion of fig. 6;
- fig. 8 is a three-dimensional view of the protection device in proximity to a sheave in a cable stringing plant;
- fig. 8a is an enlarged scale view of a part of fig. 8;
- fig. 9 is a three-dimensional view of the protection device in proximity to a sheave in a cable stringing plant;
- fig. 9a is an enlarged scale view of a part of fig. 9.

We must clarify that the phraseology and terminology used in the present description, as well as the figures in the attached drawings also in relation as to how described, have the sole function of better illustrating and explaining the present invention, their purpose being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS

We will now refer in detail to the possible embodiments of the invention, of which one or more examples are shown in the attached drawings, by way of a non-limiting illustration. The phraseology and terminology used here is also for the purposes of providing non-limiting examples.

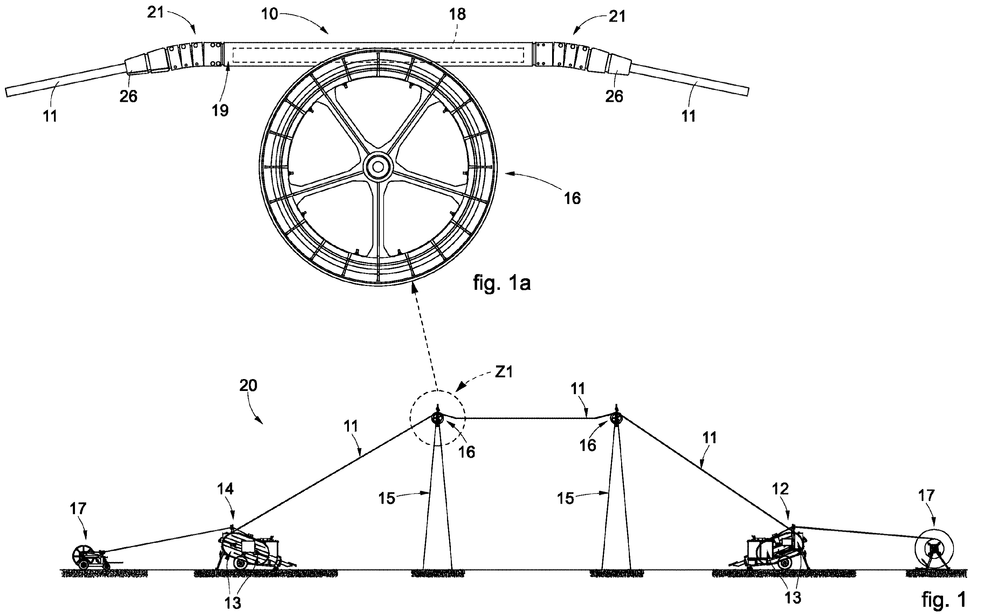

With reference to the attached drawings, fig. 1 schematically shows a stringing plant 20 according to the present invention, configured to string one or more cables 11, namely one or more electrical conductors of a high-voltage overhead line, for example. Fig. 1 schematically shows, by way of a non-limiting example, a cable 11.

The stringing plant 20 comprises, for stringing the cable 11, at least one brake machine 12 and at least one winch machine 14, each of these provided with one or more winding or unwinding members, or capstans 13.

The brake machine 12 and the winch machine 14 could also be of the winch-brake type, that is, combined to selectively perform both the winch function and also the brake function.

The brake machine 12 and the winch machine 14 are positioned on opposite sides with respect to intermediate supports 15, for example trusses, on which the cables 11 are strung. In the event winch-brake type machines are used, at least one winch-brake machine will be positioned on each side with respect to the intermediate supports.

On the intermediate supports 15, as can be seen, the cable 11 is strung on a sheave 16, or a roller, on which, as is known, the cable 11 will be subjected to a certain curving.

The cable 11 is fed to the stringing plant by means of at least one reel 17 disposed on a stand upstream of the brake machine 12, and is recovered downstream of the winch machine 14 on another reel 17 disposed on a retractor.

As is known, joints are positioned along the stringing line to join cable 11 segments. A joint 18 is shown schematically with a dashed line in fig. 1a and has the purpose of joining two cable 11 segments. The joint 18 is substantially a tubular element or sleeve, at the ends of which the cable 11 segments are attached. The joint 18 is rigid and made of metal material.

The joint 18 is housed inside a protection device 10, comprising a tubular body 19 in which the joint 18 is inserted. The tubular body 19 is rigid, in particular divided into two halves, and made of metal material, for example steel or suchlike, and substantially wraps around the joint 18. The tubular body 19 also preferably extends beyond the ends of the joint 18, thus having a length greater than the latter. The protection device 10 and the joint 18 inserted therein constitute an assembly that is used in the stringing plant 20.

The tubular body 19 comprises one or more flexible portions 21 configured to allow, during use, the ends of the device 10 to curve in a controlled manner. The flexible portions 21 are, in particular, articulated portions.

Thanks to these flexible portions 21, the device 10 is able to bend at the ends with respect to the joint 18 and the tubular body 19, which remain straight. This bending allows the ends of the device 10 to adapt to any changes in direction of the cable 11 at exit from the device 10. In this way, any changes in direction of the cable 11 at exit from the ends of the device 10 are at least partly accompanied and made more gradual by the controlled curving of the flexible portions 21. The cable 11 in fact exits from both ends of the device 10, where the flexible portions 21 are positioned, after it has exited from the ends of the joint 18. Essentially, therefore, the present protection device is advantageously articulated, thanks to the one or more flexible, in particular articulated, portions 21.

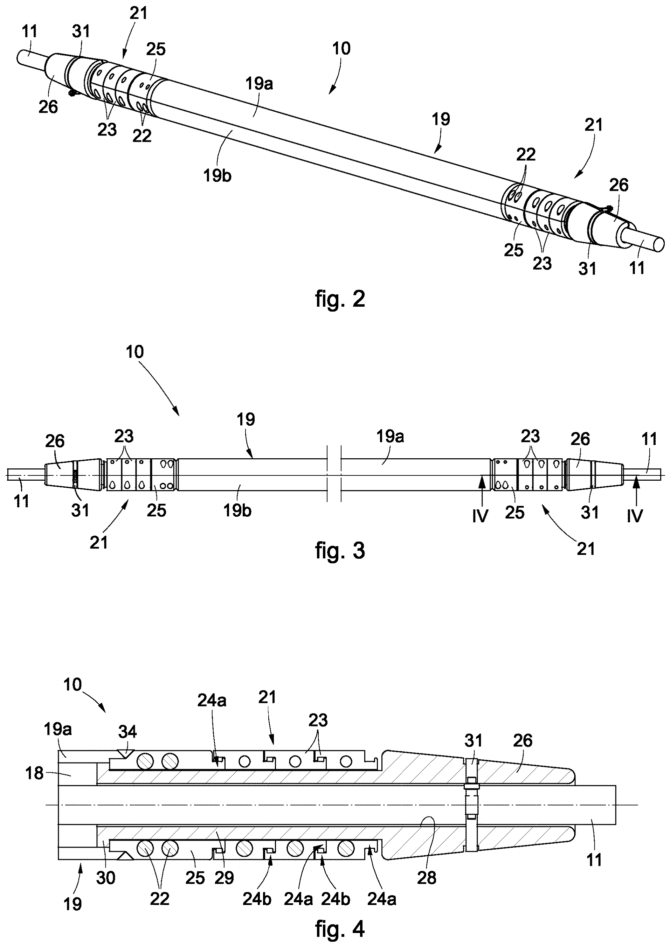

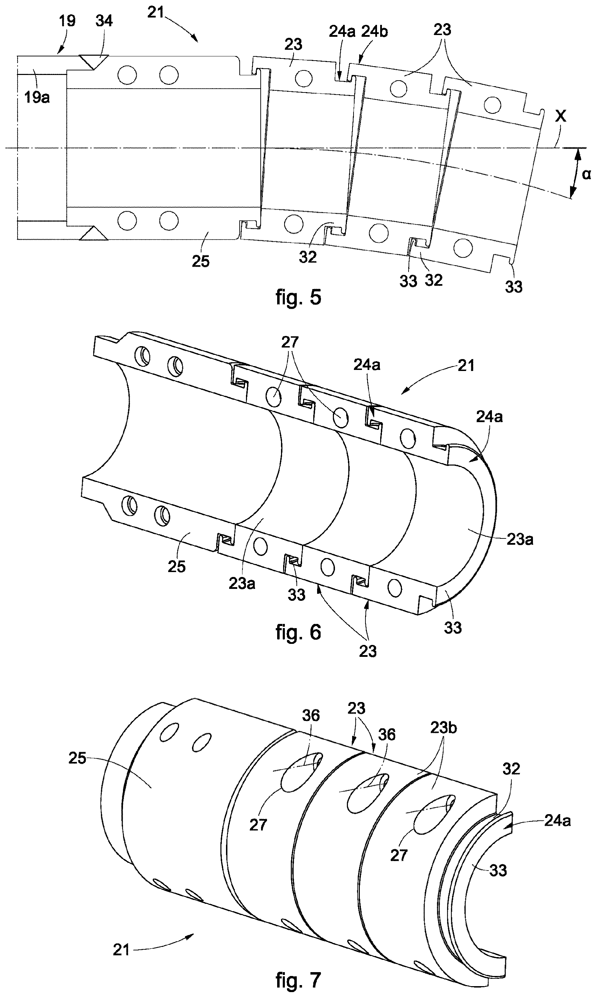

In particular, see also figs. 2, 3, 4 and 5, the tubular body 19 comprises a flexible portion 21 on each end. Each of the flexible portions 21 extends beyond the end of the joint 18 and adapts to the possible change in direction of the cable 11. The device 10 equipped with the flexible portions 21 has a greater extension than that of the joint 18. Assuming the cable 11 takes a direction X inside the joint 18 and the tubular body 19, see fig. 5, the flexible portion 21 allows the ends of the device 10 to curve by an angle α of about 10-15°.

The tubular body 19 comprises in particular two half-shells 19a, 19b, which are reciprocally joined, in particular by means of removable attachment elements 22. Each half-shell 19a, 19b has a semi-cylindrical shape so that, once coupled, they form a substantially cylindrical structure, namely, the tubular body 19. The half-shells 19a, 19b are rigid and are made of metal material, such as steel or suchlike. The attachment elements 22 are preferably embedded, that is, inserted substantially concealed, in the profile of the half-shells 19a, 19b, so as to prevent any protrusions.

Each of the flexible, in particular articulated, portions 21 is formed by a plurality of reciprocally connected rings 23 configured to have a certain reciprocal axial movement and allow to realize the controlled bending of the articulated portion 21, as in fig. 5 for example. Substantially, the rings 23 are reciprocally connected by means of annular connections 24a, 24b that allow a certain play or axial movement between the rings 23.

Each of the annular connections 24a, 24b, see in particular figs. 5, 6 and 7, is substantially a tubular element provided with a tubular body 32 connected at one end to the ring 23 and equipped, at the opposite end, with an annular part 33 with an external diameter larger than the external diameter of the tubular body 32. In particular, each ring 23 comprises a protruding annular connection 24a that engages with a recessed annular connection 24b of the following ring 23. When the reciprocally engaged annular connections 24a and 24b come into contact, they oppose the tensile forces, while still allowing a certain bending, see for example the angle α. The rings 23 can be of the same size, or have different lengths for example.

The annular connections 24a, and 24b allow to connect the rings 23 easily and effectively, allowing a certain reciprocal movement thereof that allows the flexible portion 21, and therefore the device 10, to bend, in particular at the ends.

Alternatively, the flexible portion 21 could also be formed by a spherical joint, a bellows element or other system that allows a certain bending of the device 10, in particular with respect to the joint 18.

A ring 25 is also provided that precedes the flexible portion 21 and is attached to the tubular body 19 by welding 34 or otherwise, so as to be substantially coaxial with the tubular body 19. The ring 25 is provided with a protruding annular connection 24a configured to engage with the recessed annular connection 24b of the first ring 23 of the flexible portion 21.

The external diameter of the rings 23 and 25 is, preferably, substantially equal to the external diameter of the tubular body 19, so as to prevent, at least in the rectilinear configuration, fig. 2, fig. 3 or fig. 4, any radial protrusions or recesses in the device 10.

The rings 23, see in particular fig. 6 and fig. 7, are each formed by two half-rings 23a and 23b, preferably of the same semi-circular shape, or suchlike. This allows to assemble and remove the device 10 to/from the cable 11 at the end of operations. The half-rings 23a and 23b are reciprocally joined, in particular by means of removable attachment elements 36, two of which are schematized with dash-dot lines in fig. 7, and embedded in corresponding seatings 27 so as to prevent any protrusions. The removable attachment elements 36 can be screws, bolts with corresponding nuts or other.

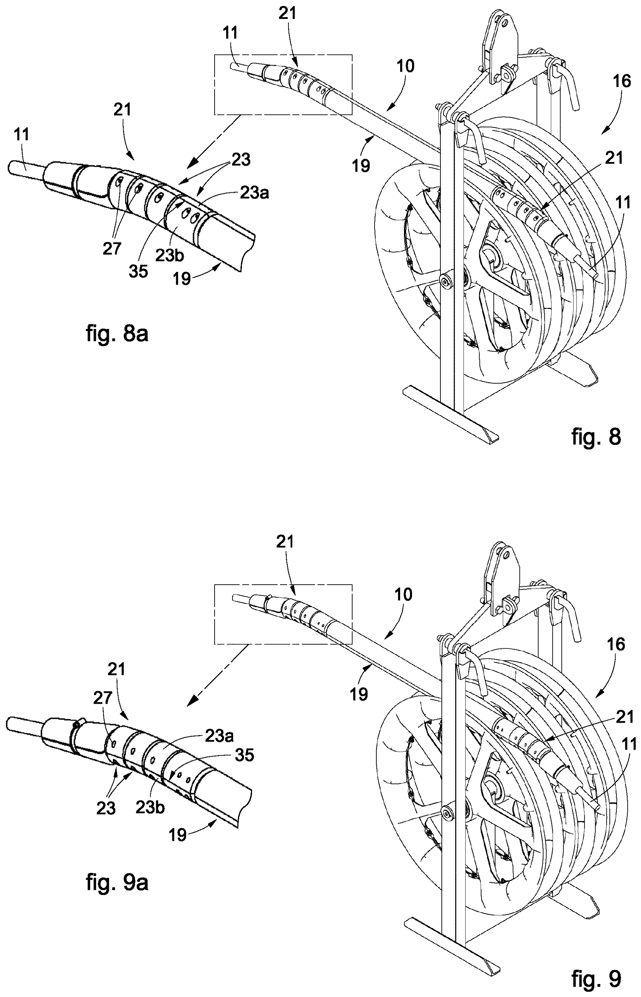

Once the half-rings 23a and 23b are joined, a contact line 35 is created substantially on both sides of the device 10, in particular in diametrically opposite positions, see figs. 8, 8a and figs. 9, 9a. The contact line 35 can be directed substantially horizontally, fig. 9, vertically, fig. 8, or variously inclined. Regardless of the direction of the contact line 35, the articulation of the flexible portions 21 is always guaranteed. This is in particular thanks to the presence of the annular connections 24a and 24b, which allow to bend the flexible portions 21 by a certain angle α substantially in any direction.

At the ends of the device 10, in particular outside the flexible portions 21, sockets 26 are positioned that wrap the cable 11 and also have the function of a lead-in to facilitate the entry of the device 10 onto the sheave 16. The sockets 26 are made of elastomeric material, such as rubber or suchlike. The sockets 26 are tubular with a lateral cut to allow them to be mounted on the cable 11; the sockets comprise a segment 29 located inside the flexible portion 21 and provided with a seating 28, fig. 4, in particular cylindrical, which hugs the cable 11 so as to protect its external strands from any damage. The segment 29 positioned inside the flexible portion 21 is interposed between the flexible portion 21 and the cable 11. The segment 29 comprises, at the end opposite the one where the tip shape is created, a ring 30 that is interposed between the ring 25 and the joint 18, so as to give positioning stability to the socket 26. The ring 30 has a larger external diameter than that of the segment 29. The sockets 26 are tightened onto the cable 11 by means of clamps 31 or suchlike.

It is clear that modifications and/or additions of parts may be made to the device for protecting a joint for connecting cables as described heretofore, without thereby departing from the field and scope of the present invention, as defined by the claims.

It is also clear that, although the present invention has been described with reference to some specific examples, a person of skill in the art will be able to achieve other equivalent forms of a device for protecting a joint for connecting cables for cable stringing plants, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Device (10) for protecting a joint (18) for connecting cables (11) for a cable stringing plant (20), **characterized in that** it comprises a rigid tubular body (19) in which, during use, said joint (18) is inserted, said tubular body (19) comprising at the ends one or more flexible portions (21) configured to allow, during use, a controlled curving of said device (10), wherein said one or more flexible portions (21) are articulated and comprise a plurality of rings (23), each formed by at least two reciprocally joined half-rings (23a, 23b).

2. Device (10) as in claim 1, **characterized in that** once said half-rings (23a, 23b) are reciprocally joined, a contact line (35) is created between said half-rings (23a, 23b) and on opposite sides of the device (10), which is directed substantially horizontally, vertically, or variously inclined.

3. Device (10) as in claim 1 or 2, **characterized in that** said one or more flexible portions (21) comprise annular connections (24a, 24b) for connection between said rings (23).

4. Device as in claim 3, **characterized in that** said one or more flexible portions (21) comprise, for a given ring (23), a protruding annular connection (24a) configured to engage with a recessed annular connection (24b) of the following ring (23).

5. Device (10) as in any claim hereinbefore, **characterized in that** said half-rings (23a, 23b) are reciprocally joined by means of removable attachment elements (36) embedded in corresponding seatings (27).

6. Device (10) as in any claim hereinbefore, **characterized in that** said tubular body (19) is formed by at least two half-shells (19a, 19b) which are reciprocally joined.

7. Device (10) as in claim 6, **characterized in that** each of said half-shells (19a, 19b) has a semi-cylindrical shape so that, once reciprocally joined, they form a substantially cylindrical structure.

8. Device (10) as in any claim hereinbefore, **characterized in that** said one or more flexible portions (21) extend, during use, beyond the ends of said joint (18).

9. Device (10) as in any claim hereinbefore, **characterized in that** said one or more flexible portions (21) allow to curve the ends of the device (10) by an angle (α) of approximately 10-15° with respect to the direction (X) taken by said cable (11) in a central segment of said device (10).

10. Device (10) as in any claim hereinbefore, **characterized in that** at its ends it comprises sockets (26) for housing the cable (11).

11. Device (10) as in claim 8, **characterized in that** said sockets (26) are tubular and comprise a segment (29) located inside each of said one or more flexible portions (21) and provided with a seating (28) for housing the cable (11).

12. Assembly comprising a joint (18) for connecting cables (11) for a cable stringing plant (20) and a protection device (10) as in any claim hereinbefore in which said joint (18) is inserted.

13. Cable stringing plant, provided with at least one winch machine (14) and at least one brake machine (12) which are positioned on opposite sides with respect to one or more intermediate supports (15), said plant comprising at least one joint (18) for connecting cables (11) which is provided with a protection device (10) as in any previous claim from 1 to 11.
